# EUROPEAN PATENT SPECIFICATION

(11) **EP 3 537 684 B1**
(45) Date of publication and mention of the grant of the patent: **28.10.2020**
(21) Application number: 19160251.5
(22) Date of filing: 01.03.2019
(51) Int. Cl.: H04L 29/06, G06F 16/00

(54) **APPARATUS, METHOD, AND PROGRAM FOR MANAGING DATA**
VORRICHTUNG, VERFAHREN UND PROGRAMM ZUR VERWALTUNG VON DATEN
APPAREIL, PROCÉDÉ ET PROGRAMME DE GESTION DE DONNÉES

(30) Priority: 05.03.2018 JP 2018039038
(43) Date of publication of application: 11.09.2019
(73) Proprietor: FUJITSU LIMITED, Kanagawa 211-8588 (JP)
(72) Inventor: Imai, Satoshi, Kanagawa 211-8588 (JP)
(74) Representative: Hoffmann Eitle

(56) References cited:
- US-A1- 2007 198 636
- US-A1- 2011 191 300
- US-A1- 2012 078 849
- US-A1- 2013 282 654
- US-B1- 9 363 090

## Description

### FIELD

The embodiments discussed herein are related to a management program for managing data.

### BACKGROUND

A technique for sharing data accumulated in various distributed sites among multiple users by peer-to-peer communication on an overlay network has been recently proposed.

Japanese Laid-open Patent Publication No. 2007-25964 discloses a technique for managing the location of data distributed in a wide area by communication with other servers over a network.

Japanese Laid-open Patent Publication No. 2017-50763 discloses a technique for receiving a permission request from a user terminal of a user of the content, and when permission conditions are satisfied, transmitting permission information.

Japanese Laid-open Patent Publication No. 2017-204707 proposes a content circulation system for registering the hash value of the content and metadata with a block chain.

US 2013/282654 A1 relates to a query engine communication method, wherein each query agent 208 registers with a coordinator agent, in order to execute an application. Herein, the coordinator provides addresses of query agents/engines across a cluster of nodes.

US 2011/191300 A1 relates to an archival storage cluster of preferably symmetric nodes, and includes a metadata management system that organizes and provides access to given metadata.

US 2012/078849 A1 relates to a storage cluster and a system and method therefore, for enhancing availability of distributed objects during a partial database outage.

### SUMMARY

### [TECHNICAL PROBLEM]

However, if the data is stored in multiple distributed sites, there is no manager who manages all the sites and data. This makes management of the shared data insufficient, making it difficult to conform to an access policy for each data and to guarantee the authenticity of the data. This also makes it difficult for the user to search the shared data for desired data.

In consideration of the above problems, it is preferable to enable management of distributedly stored data.

### [SOLUTION TO PROBLEM]

According to an aspect of the embodiments, a method of communication for a plurality of node devices included in a data circulation network to execute, the method includes when receiving a request to register metadata including attribute information on data of a terminal connected to one of the node devices, transferring the metadata to the plurality of node devices and when receiving a request to obtain data based on the metadata, obtaining the data from the terminal and transferring the data to a requestor of the data.

### [ADVANTAGEOUS EFFECTS OF INVENTION]

In an aspect, it is possible to manage the data which is stored distributed ly.

### BRIEF DESCRIPTION OF DRAWINGS

FIG. 1 is a diagram illustrating an example of a data circulation network according to an embodiment;
FIG. 2 is a diagram illustrating an example of a gateway;
FIG. 3A is a diagram illustrating information included in a metadata registration transaction;
FIG. 3B is a diagram illustrating information included in a metadata acquisition transaction;
FIG. 3C is a diagram illustrating information included in a data acquisition transaction;
FIG. 4 is a diagram illustrating an example of metadata;
FIG. 5A is a diagram illustrating a transfer table for a provider-side gateway;
FIG. 5B is a diagram illustrating a transfer table for a user-side gateway;
FIG. 6 is a sequence chart illustrating an example of verification processing;
FIG. 7 is a sequence chart illustrating an example of metadata registration processing;
FIG. 8 is a sequence chart illustrating an example of metadata acquisition processing;
FIG. 9 is a sequence chart illustrating an example of data acquisition processing;
FIG. 10 is a sequence chart illustrating an example of data acquisition processing; and
FIG. 11 is a diagram illustrating an example of the hardware configuration of the gateway.

### DESCRIPTION OF EMBODIMENTS

### Example of overall configuration of system of the embodiments

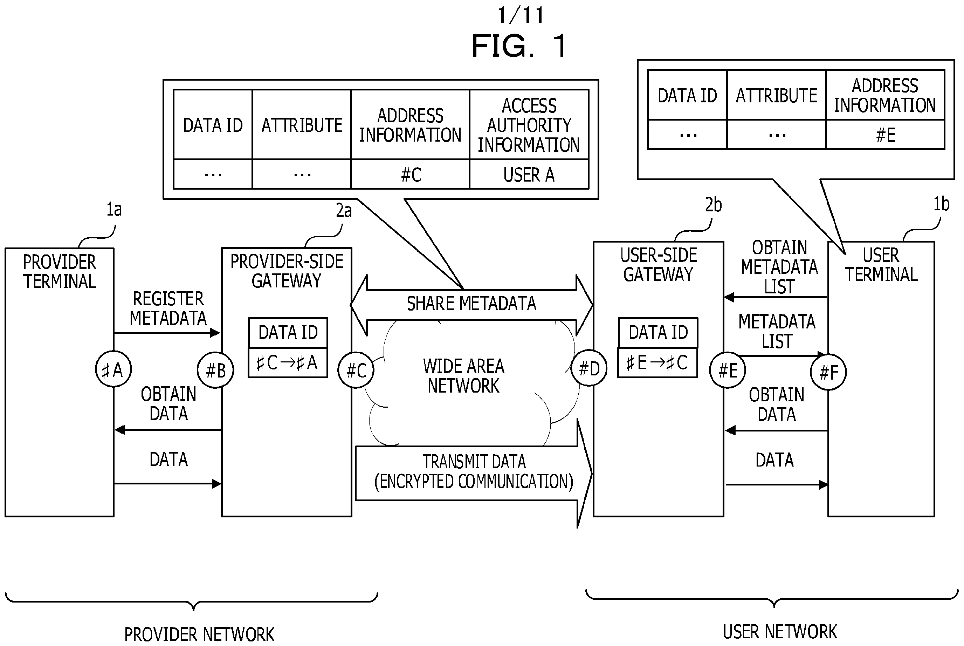

FIG. 1 is a diagram illustrating an example of a data circulation network according to an embodiment. The system illustrated in FIG. 1 includes a provider terminal 1a, a provider-side gateway 2a, a user-side gateway 2b, and a user terminal 1b. Peer-to-peer communication on an overlay network is applied between the provider-side gateway 2a and the user-side gateway 2b.

The provider terminal 1a and the provider-side gateway 2a belong to the same local network (a provider network). The user-side gateway 2b and the user terminal 1b belong to the same local network (a user network).

Examples of the provider terminal 1a and the user terminal 1b include a server, a personal computer, and a tablet terminal. The provider terminal 1a is an example of a device that stores data. Examples of the provider-side gateway 2a and the user-side gateway 2b include a physical server and a virtual machine running on cloud. The provider-side gateway 2a and the user-side gateway 2b are hereinafter sometimes collectively referred to as "gateway 2".

The system of the embodiment may include three or more gateways 2. The provider-side gateway 2a and the user-side gateway 2b have the same function. For example, the provider-side gateway 2a may function as the user-side gateway 2b, and the user-side gateway 2b may function as the provider-side gateway 2a.

The operation of the embodiment will be described, in outline, using the configuration example illustrated in FIG. 1. The provider terminal 1a transmits a metadata registration transaction to the provider-side gateway 2a. The provider-side gateway 2a transmits data attributes and the hash value of the data (data ID) included in the metadata registration transaction to a plurality of gateways 2 as the metadata of the data to be registered for sharing.

The provider-side gateway 2a sets "#C", which is address information on the provider-side gateway 2a, in the address information in the metadata. The provider-side gateway 2a sets a rule, "#C → #A" on a transfer table in association with the data ID. Thus, the provider-side gateway 2a conceals the address information (#A) on the provider terminal 1a from the other gateways 2.

When the user terminal 1b uses data, the user terminal 1b transmits a metadata acquisition transaction to the user-side gateway 2b. The metadata acquisition transaction includes a user ID and a description of available data (for example search conditions, such as a keyword).

The user-side gateway 2b lists metadata that is accessible by the designated user ID and that satisfies the conditions and transmits the list to the user terminal 1b. Before transmitting the list to the user terminal 1b, the user-side gateway 2b converts the address information in the metadata from address information (#C) specified by the IP address, the port number, or the like of the provider-side gateway 2a to address information (#E) on the user-side gateway 2b. The user-side gateway 2b sets a rule, "#E → #C", on a transfer table in association with the data ID. Thus, the user-side gateway 2b conceals the address information on the provider-side gateway 2a from the user terminal 1b.

When receiving a data acquisition transaction including a data ID from the user terminal 1b, the user-side gateway 2b converts the address information in the transaction to #C based on the transfer table and transmits the transaction to the provider-side gateway 2a.

The provider-side gateway 2a converts the address information in the transaction to #A based on the transfer table corresponding to the data ID included in the transaction and transmits the data acquisition transaction to the provider terminal 1a to obtain the data. The provider-side gateway 2a hashes the obtained data, checks the hashed value with the data ID in the metadata (a hash value of the data), and transmits the encrypted data to the user-side gateway 2b.

The user-side gateway 2b hashes the obtained data, checks the hashed data with the data ID in the metadata (the hash value), and transmits the hashed data to the user terminal 1b.

Thus, since the gateways 2 share the metadata and manage the data, the user may obtain desired data from the provider terminal 1a. Since the provider-side gateway 2a stores the metadata and shares the metadata with the other gateways 2 but does not store the data, data security is ensured.

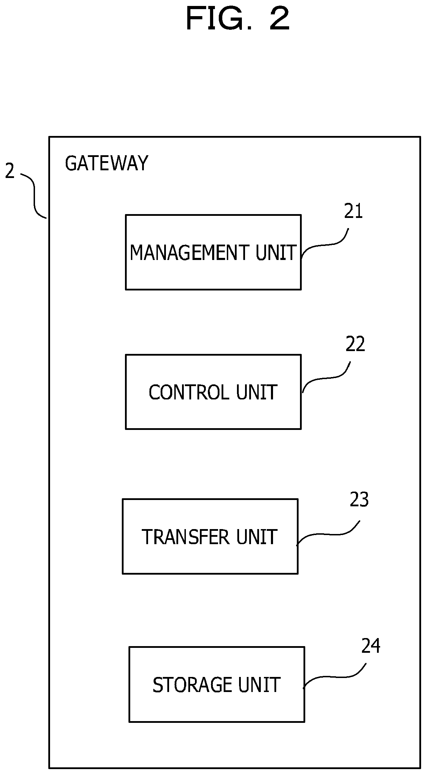

FIG. 2 is a diagram illustrating an example of the gateway 2. The gateway 2 is a generic name of the provider-side gateway 2a and the user-side gateway 2b. As illustrated in FIG. 1, the gateway 2 is used in a data circulation network that executes transactions of distributed data. The gateway 2 is an example of a node device.

When the management unit 21 receives a metadata registration transaction, the management unit 21 computes the hash value of the data corresponding to metadata and stores the metadata in storage units 24 of the plurality of gateways 2. The plurality of gateways 2 include the gateway 2 that has received the metadata registration transaction and the other gateways 2. The metadata to be stored includes attribute information on the data, address information on the gateway 2 itself, identification information of a user authorized to access the data, and the hash value of the data.

When the management unit 21 receives a metadata acquisition transaction, the management unit 21 obtains metadata that satisfies conditions included in the transaction with reference to the data attribute information included in the metadata from the storage unit 24, and transmits the metadata to the issuing source of the transaction. An example of the issuing source of the metadata acquisition transaction is the user terminal 1b in FIG. 1.

When receiving the metadata acquisition transaction, the management unit 21 checks the identification information on the user specified in the metadata acquisition transaction with the user identification information in the metadata and obtains metadata including the specified user identification information.

The management unit 21 in the present embodiment has a function incorporating a smart contract function in a consortium blockchain technique.

When the control unit 22 obtains data from the provider terminal 1a, the control unit 22 computes the hash value of the obtained data and checks the computed hash value with the hash value included in the metadata.

When the control unit 22 receives a metadata acquisition transaction, the control unit 22 converts the address information on the data included in the metadata to the address information on the control unit 22 itself and transmits the metadata after the conversion to the issuing source of the metadata acquisition transaction.

The control unit 22 creates a table (a transfer table) in which the data identification information, the address information on the provider terminal 1a, and the address information on the gateway 2 are associated with one another. When the control unit 22 receives a data acquisition transaction from another gateway 2, the control unit 22 accesses the provider terminal 1a to obtain the data using the address information on the provider terminal 1a associated with the address information on the gateway 2 with reference to the transfer table.

The control unit 22 in the present embodiment has a function incorporating a Web software development kit (SDK) in the consortium blockchain technique.

The transfer unit 23 executes various-data transfer processing using the created transfer table. The transfer unit 23 has a proxy server function.

The storage unit 24 stores metadata. The storage unit 24 in the present embodiment has a function incorporating the function of distributed ledgers in the blockchain technique.

Thus, when the gateway 2 receives a metadata registration transaction, the gateway 2 functions as the provider-side gateway 2a. When the gateway 2 receives a metadata acquisition transaction or a data acquisition transaction, the gateway 2 functions as a user-side gateway 2b.

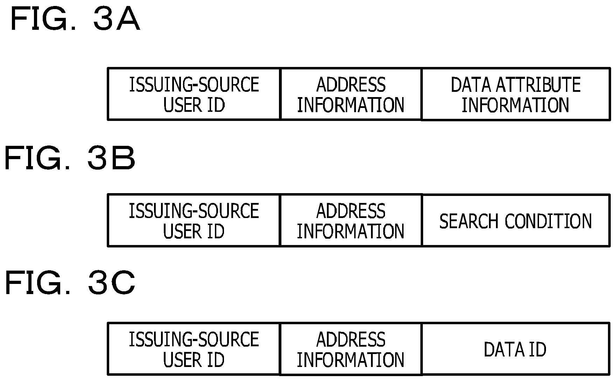

FIGs. 3A to 3C are diagrams illustrating examples of information included in each transaction. FIG. 3A illustrates information included in the metadata registration transaction. The metadata registration transaction includes an issuing source user ID, address information, and metadata-related information.

In the metadata registration transaction, "issuing source user ID" is the user identification information of the transaction issuing source, and "address information" is, for example, the address information on the provider-side gateway 2a. The "data attribute information" includes the name of the data, a keyword related to the data, the identification information of the metadata registration transaction, the address information on the provider terminal 1a, and the date of issuance of the metadata registration transaction. Examples of the address information on the provider terminal 1a include a proxy address and a uniform resource locator (URL) parameter for use in data access. The details of the content of the metadata will be described later.

FIG. 3B illustrates information included in the metadata acquisition transaction. The metadata acquisition transaction includes an issuing source user ID, address information, and a search condition. In the metadata acquisition transaction, "issuing source user ID" is the user identification information of the transaction issuing source, "address information" is, for example, address information on the user-side gateway 2b, and "search condition" is, for example, a keyword included in the metadata.

FIG. 3C illustrates information included in the data acquisition transaction. The data acquisition transaction includes an issuing source user identification information, address information, and a data ID. In the data acquisition transaction, "issuing source user ID" is the user identification information of the transaction issuing source, "address information" is, for example, address information on the user-side gateway 2b, and "data ID" is a data identification information, included in the metadata and corresponding to the data that the user requires.

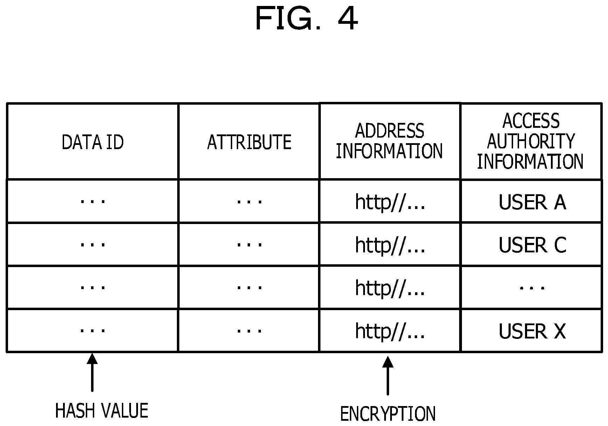

FIG. 4 is a diagram illustrating an example of the metadata. The metadata includes a data ID, attributes, address information, and access authority.

The "data ID" is data identification information, for example, a hash value that the control unit 22 creates based on the data.

The "attributes" include various information for describing the data, including information other than the address information on the provider terminal 1a among the data attribute information included in the metadata registration transaction. Examples of the attributes include data name, a keyword related to the data, the ID of the metadata registration transaction, and the issue date of the metadata registration transaction.

An example of "address information" is the address information (for example, URL) on the gateway 2 (the provider-side gateway 2a) that receives the metadata registration transaction. The management unit 21 may encrypt the address information and store the encrypted address information in the metadata. For example, when the provider-side gateway 2a receives the metadata registration transaction from the provider terminal 1a, the provider-side gateway 2a encrypts the address information using an encryption method in which the user who is authorized to access the data may decrypt the encrypted information using a decryption key.

The provider-side gateway 2a stores, as the address information in the metadata, not the address information on the provider terminal 1a but the address information on the provider-side gateway 2a. This allows the provider-side gateway 2a to conceal the address information on the provider terminal 1a from other gateways 2.

The "access authority information" is information on data access authority. An example of "access authority information" is identification information (the user ID) on a user who is authorized to access the data.

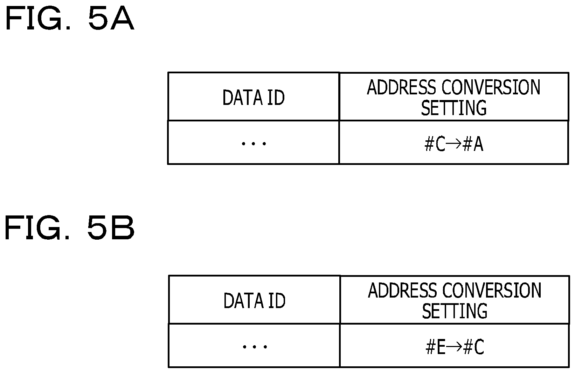

FIGs. 5A and 5B are diagrams illustrating examples of the transfer tables. As illustrated in FIGs. 5A and 5B, the transfer tables each store a data ID and an address conversion setting. FIG. 5A illustrates a transfer table for a gateway 2 (the provider-side gateway 2a in FIG. 1) that receives a metadata registration transaction. The addresses in FIGs. 5A and 5B are the addresses illustrated in FIG. 1.

The transfer table for the provider-side gateway 2a stores a setting for converting the address information (#C) on the provider-side gateway 2a to the address information (#A) on the provider terminal 1a that stores the data. When the provider-side gateway 2a receives a data acquisition transaction from the user-side gateway 2b, the provider-side gateway 2a uses this transfer table.

Thus, the metadata shared with the user-side gateway 2b stores the address information on the provider-side gateway 2a to conceal the address information on the provider terminal 1a. Thus, by setting the transfer table illustrated in FIG. 5A, the provider-side gateway 2a enables the user-side gateway 2b to use the data.

FIG. 5B illustrates a transfer table for a gateway 2 (the user-side gateway 2b) that receives metadata from another gateway 2 (the provider-side gateway 2a).

The transfer table of the user-side gateway 2b stores a setting for converting the address information (#E) on the user-side gateway 2b to the address information (#C) on the gateway 2 (the provider-side gateway 2a) that transmits the metadata. When the user-side gateway 2b receives a data acquisition transaction from the user terminal 1b, the user-side gateway 2b uses this transfer table.

When the user-side gateway 2b transmits the metadata to the user terminal 1b, the user-side gateway 2b converts the address information in the metadata to the address information on the user-side gateway 2b to conceal the address information on the provider-side gateway 2a. The user terminal 1b specifies the address information on the user-side gateway 2b in the data acquisition transaction. Thus, by setting the transfer table illustrated in FIG. 5B in advance, when the user-side gateway 2b receives a data acquisition transaction from the user terminal 1b, the user-side gateway 2b may transfer the data acquisition transaction to the provider-side gateway 2a.

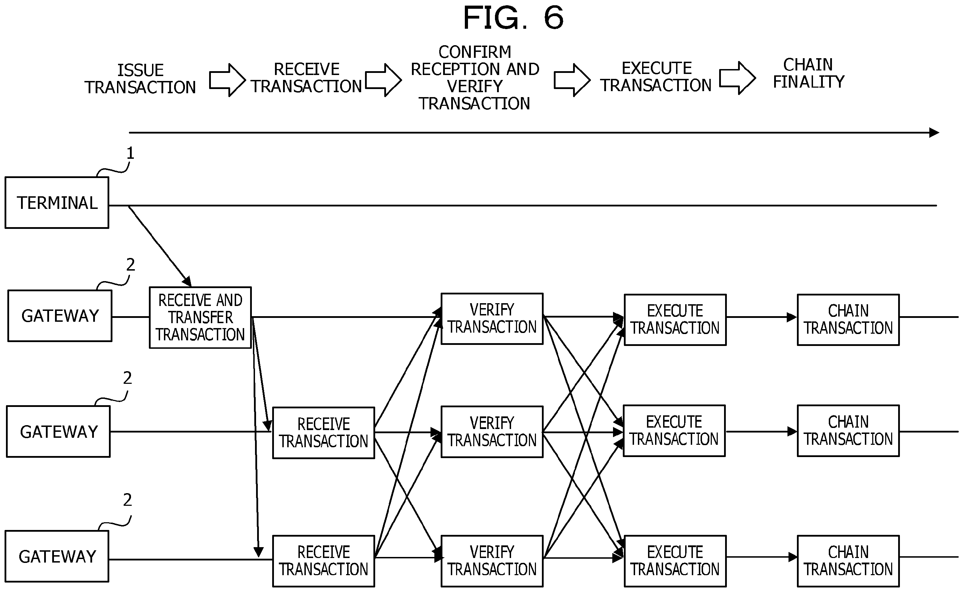

FIG. 6 is a sequence chart illustrating an example of verification processing. A terminal 1 illustrated in FIG. 6 corresponds to the provider terminal 1a or the user terminal 1b in FIG. 1. The transaction illustrated in FIG. 6 is a metadata registration transaction, a metadata acquisition transaction, or a data acquisition transaction.

The terminal 1 transmits a transaction to a gateway 2 that belongs to the same local network as the local network of the terminal 1. The gateway 2 that has received the transaction transfers the transaction to the other gateways 2. Each gateway 2 verifies the validity of the transaction.

If the transaction is a metadata registration transaction, the verification of the transaction corresponds to authentication of the registrant. If the transaction is a metadata acquisition transaction, the verification of the transaction corresponds to authentication of a user who has issued the transaction or verification of user's access right for the metadata. If the transaction is a data acquisition transaction, the verification of the transaction corresponds to authentication of a user who issued the transaction or verification of user's access right for the data.

After the verification of the transaction, each gateway 2 transmits the result of the verification to the other gateways 2. Each gateway 2 executes the transaction based on the received verification result. For example, a predetermined percentage of the gateways 2 output verification results indicating that the transaction is valid, each gateway 2 executes the transaction.

Each gateway 2 stores the history of the executed transaction in a chain. For example, each gateway 2 hashes the history of the last transaction and stores the hash value together with the history of the transaction.

Since each gateway 2 executes the transaction according to the result of verification performed by each gateway 2, each gateway 2 may verify the validity of the transaction even without a specific manager. Since each gateway 2 chains the history of the transaction and stores the history of the hash value of the last transaction together with the history of the last transaction, falsification of the history is reduced. The processing illustrated in FIG. 6 is an application of a method of ledger management of a consortium blockchain.

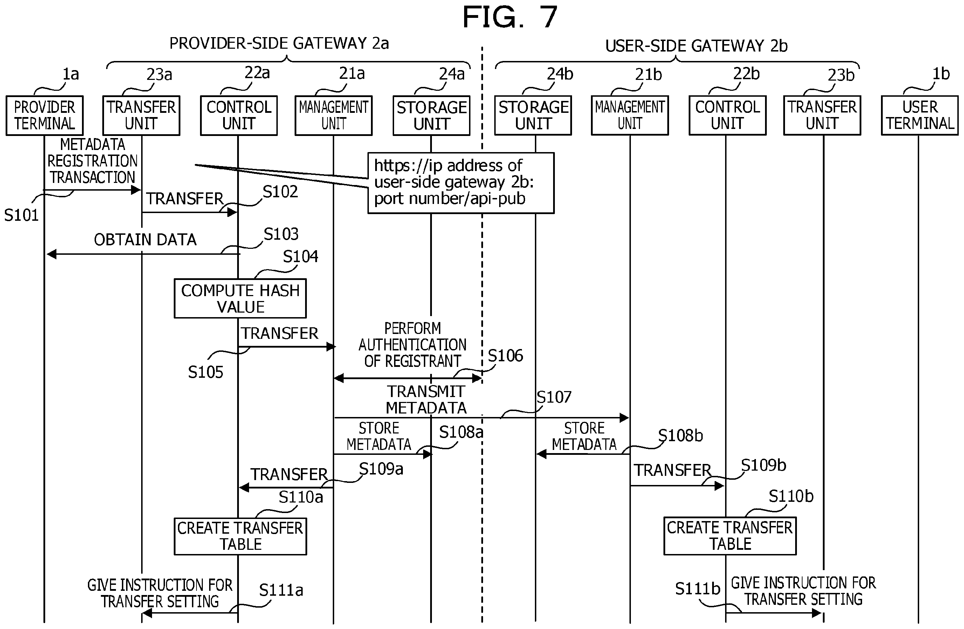

FIG. 7 is a sequence chart illustrating an example of metadata registration processing. In FIG. 7, a management unit 21a, a control unit 22a, a transfer unit 23a, and a storage unit 24a are elements included in the provider-side gateway 2a illustrated in FIG. 1. The management unit 21a, the control unit 22a, the transfer unit 23a, and the storage unit 24a respectively correspond to the management unit 21, the control unit 22, the transfer unit 23, and the storage unit 24 illustrated in FIG. 2. A management unit 21b, a control unit 22b, a transfer unit 23b, and a storage unit 24b illustrated in FIG. 7 are elements included in the user-side gateway 2b illustrated in FIG. 1. The management unit 21b, the control unit 22b, the transfer unit 23b, and the storage unit 24b respectively correspond to the management unit 21, the control unit 22, the transfer unit 23, and the storage unit 24 illustrated in FIG. 2.

When registering metadata, the provider terminal 1a transmits a metadata registration transaction to the transfer unit 23a (step S101). An example form of the destination address of the metadata registration transaction is "https://ip address of the user-side gateway 2b: port number/api-pub".

The transfer unit 23a transfers the metadata registration transaction to the control unit 22a (step S102). The control unit 22a obtains data corresponding to the metadata to be registered from the provider terminal 1a (step S103). The provider terminal 1a may transmit data to the transfer unit 23a together with the metadata registration transaction, and the transfer unit 23a may transfer the received data to the control unit 22a.

The control unit 22a computes the hash value of the obtained data (step S104). The control unit 22a computes the hash value of the obtained data using, for example, a predetermined hash function. After computing the hash value, the control unit 22a deletes the obtained data.

The control unit 22a transfers the metadata and the hash value in the obtained metadata registration transaction to the management unit 21a (step S105). The management unit 21a transfers the metadata registration transaction to the plurality of gateways 2 and performs authentication of the registrant of the metadata. As in the example illustrated in FIG. 6, the plurality of gateways 2 verify the transaction to perform authentication of the registrant of the metadata.

If the authentication succeeds, that is, if it is determined that the metadata registrant has authority for data registration, the management unit 21a transmits the metadata and an instruction to store the metadata to the plurality of gateways 2 including the user-side gateway 2b (step S107). The management unit 21a causes the storage unit 24a to store the metadata (step S108a).

The management unit 21a transfers the result of authentication to the control unit 22a (step S109a). The control unit 22a creates a transfer table (for example, the table illustrated in FIG. 5A) based on the registered metadata

(step S110a). The control unit 22a instructs the transfer unit 23a on a transfer setting based on the created transfer table (step S111a). The setting at step S111a corresponds to a reverse proxy setting.

The management unit 21b causes the storage unit 24b to store the metadata (step S108b). The management unit 21b transfers the authentication result to the control unit 22b (step S109b). The control unit 22a creates a transfer table (for example, the table illustrated in FIG. 5B) based on the metadata (step S110b). The control unit 22a instructs the transfer unit 23a on a transfer setting based on the created transfer table (step S111b). The setting at step S111b corresponds to a reverse proxy setting.

Thus, the management unit 21a causes the storage unit 24 in each of the plurality of gateways 2 to store the metadata.

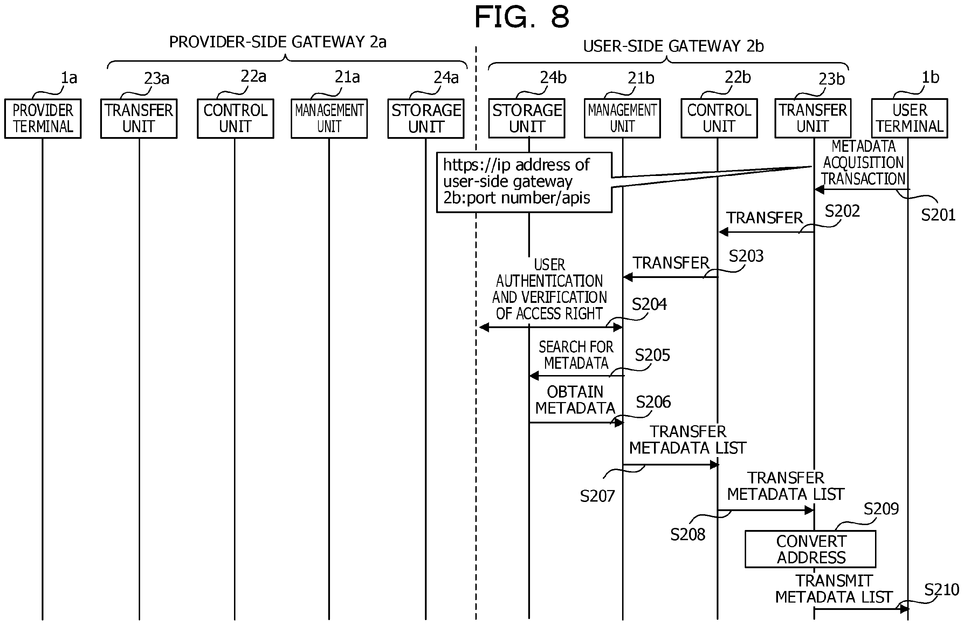

FIG. 8 is a sequence chart illustrating an example of metadata acquisition processing. Since the configuration illustrated in FIG. 8 is similar to the configuration in FIG. 7, a description thereof will be omitted.

The user terminal 1b transmits a metadata acquisition transaction to the transfer unit 23b of the user-side gateway 2b (step S201). An example form of the destination address of the metadata acquisition transaction is "https://ip address of the user-side gateway 2b:port number/apis".

The transfer unit 23b transfers the received metadata acquisition transaction to the control unit 22b (step S202). The control unit 22b transfers the metadata acquisition transaction to the management unit 21b (step S203).

The management unit 21b checks the user ID indicated by the metadata acquisition transaction with the user ID in the metadata to execute user authentication and verification of user's access right for the metadata (step S204). The management unit 21b transfers the metadata acquisition transaction to the plurality of gateways 2, and the plurality of gateways 2 perform user authentication, as illustrated in the example in FIG. 6.

The management unit 21b searches the metadata stored in the storage unit 24b for metadata in which access authority information includes the user ID specified in the metadata acquisition transaction and satisfying the condition specified in the transaction (step S205). For example, if the metadata acquisition transaction includes a keyword as the condition, the management unit 21b searches for metadata in which the attributes includes the keyword.

The management unit 21b obtains a list of metadata including the specified user ID and satisfying the condition from the storage unit 24b (step S206). The management unit 21b transfers the obtained metadata list to the control unit 22b (step S207).

The control unit 22b transfers the obtained metadata list to the transfer unit 23b (step S208). The transfer unit 23b converts the address information in the metadata from address information on the provider-side gateway 2a to address information on the user-side gateway 2b (step S209). The transfer unit 23b transfers a list of metadata including the converted address information to the user terminal 1b (step S210).

The transfer unit 23b converts the address information to the address information on the user-side gateway 2b and transfers the converted address information to the user terminal 1b, so that the address information on the provider-side gateway 2a may be concealed from the user terminal 1b.

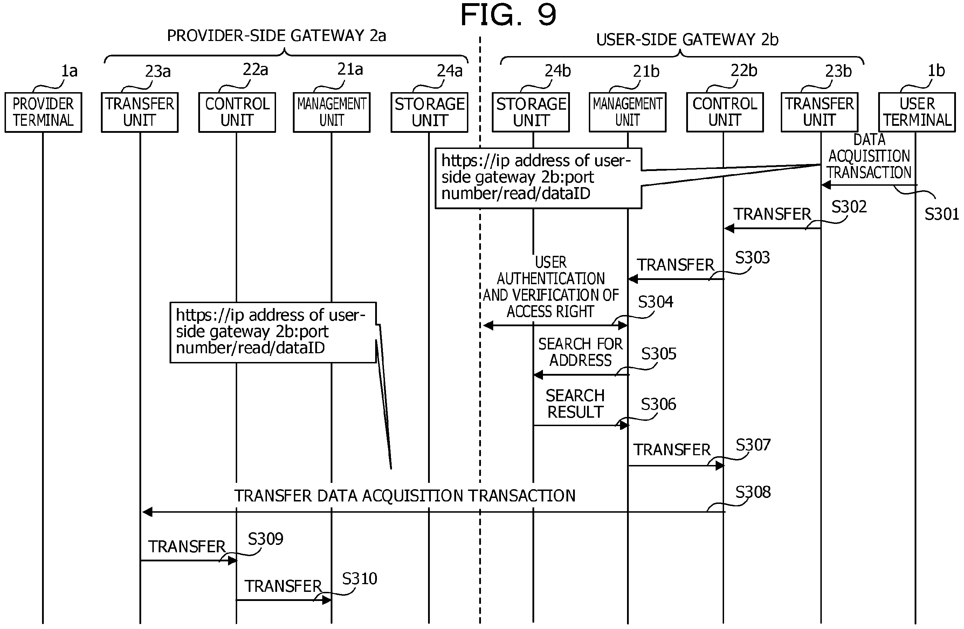

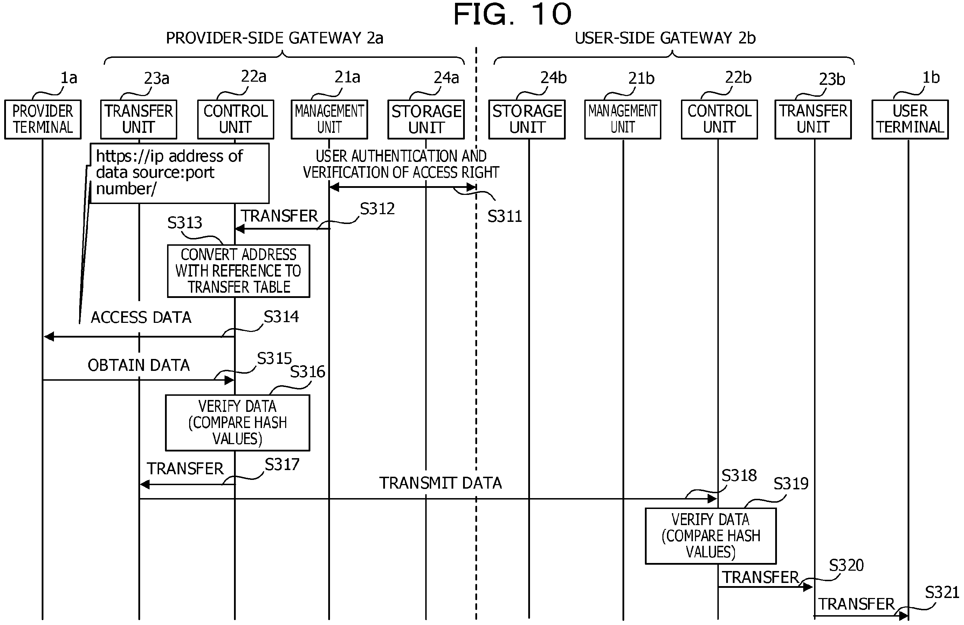

FIGs. 9 and 10 are sequence charts illustrating examples of data acquisition processing. The configurations illustrated in FIGs. 9 and 10 are respectively similar to the configurations in FIGs. 7 and 8, and descriptions thereof will be omitted.

The user terminal 1b transmits a data acquisition transaction to the transfer unit 23b of the user-side gateway 2b (step S301). An example form of the destination address of the data acquisition transaction is "https://ip address of the user-side gateway 2b:port number/read/dataID".

The data acquisition transaction includes the data ID of the data to be obtained. The user has already obtained a metadata list. This allows the user to specify the data to be obtained by referring to the attribute in the metadata list to find the data ID of the data.

The transfer unit 23b transfers the data acquisition transaction to the control unit 22b (step S302). The control unit 22b transfers the data acquisition transaction to the management unit 21b (step S303).

The management unit 21b executes user authentication and verification of user's access right for the data (step S304). For example, the management unit 21b transfers the data acquisition transaction to the plurality of gateways 2 and performs user authentication and verification of the access right based on the metadata. For example, as in FIG. 6, the plurality of gateways 2 verify the transaction to perform authentication of the user. For example, if the user ID in the data acquisition transaction is included in the access authority information included in the metadata, the plurality of gateways 2 determine that the user has legitimate data usage authority.

If at step S304 it is determined that the user has legitimate authority, the management unit 21b searches the metadata for address information associated with the data ID specified in the transaction (step S305). The management unit 21b obtains a search result sent back from the storage unit 24b (step S306). The management unit 21b transfers the address information included in the search result to the control unit 22b (step S307).

The control unit 22b transfers the data acquisition transaction to the transfer unit 23b of the gateway 2 (the provider-side gateway 2a) indicated by the obtained address information (step S308). An example form of the destination address of the data acquisition transaction is "https://ip address of the user-side gateway 2b:port number/read/dataID". If data corresponding to the data ID specified in the data acquisition transaction is present, the control unit 22b may send back the search result to the user terminal 1b.

The transfer unit 23a transfers the data acquisition transaction to the control unit 22a (step S309). The control unit 22a transfers the data acquisition transaction to the management unit 21a (step S310).

The management unit 21a executes user authentication and verification of user's access right for the data (step S311). For example, the management unit 21a transfer the data acquisition transaction to the plurality of gateways 2 and performs user authentication based on the metadata. For example, as illustrated in FIG. 6, the plurality of gateways 2 perform user authentication by verifying the transaction. For example, if the user ID in the data acquisition transaction is included in the access authority information in the metadata, the plurality of gateways 2 determine that the user has legitimate data usage authority.

The gateway 2 reduces unauthorized access to data by verifying data access right using access authority information in the metadata.

The management unit 21a transfers the authentication result to the control unit 22a (step S312). The control unit 22a converts the address information in the data acquisition transaction with reference to the transfer table created at step S110a in FIG. 7 (step S313). The control unit 22a accesses data indicated by the converted address information (step S314) to obtain the data (step S315). An example form of the access destination address at step S314 is "https://ip address of the data source:port number/".

For example, the management unit 21a obtains data using the address information on the provider terminal 1a associated with the address information on the provider-side gateway 2a with reference to the transfer table.

The control unit 22a computes a hash value from the obtained data and checks the computed hash value with a hash value corresponding to the obtained data in the metadata stored in the storage unit 24a to verify the validity of the data (step S316). If the hash value in the metadata and the computed hash value are the same, the control unit 22a determines that the data is valid.

The control unit 22a encrypts the obtained data and transfers the encrypted data to the transfer unit 23a (step S317). If at step S316 the control unit 22a determines that the data is not valid, the control unit 22a transmits, for example, error information, to the transfer unit 23a. The transfer unit 23a transfers the obtained data to the control unit 22b of the user-side gateway 2b (step S318).

The control unit 22b computes a hash value from the obtained data and checks the computed hash value with a hash value corresponding to the obtained data in the metadata stored in the storage unit 24b to verify the validity of the data (step S319). If the hash value in the metadata and the computed hash value are the same, the control unit 22b determines that the data is valid.

The control unit 22b transfers the data to the transfer unit 23b (step S320). The transfer unit 23b transfers the data to the user terminal 1b (step S321).

Since the gateway 2 verifies the validity of the data obtained from the provider terminal 1a using the hash value in the metadata, the gateway 2 may detect falsification of the data, allowing secure data transaction.

### Example of hardware configuration of gateway 2

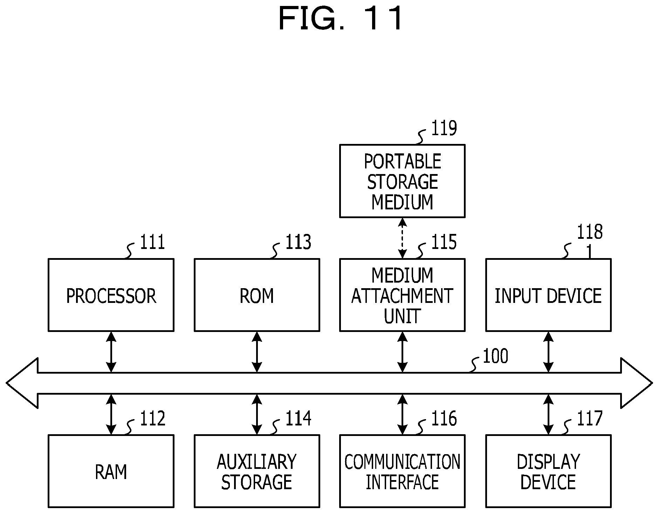

Referring to FIG. 11, an example of the hardware configuration of the gateway 2 will be described. As illustrated in the example in FIG. 11, a processor 111, a random access memory (RAM)112, a read only memory (ROM) 113, an auxiliary storage 114, a medium attachment unit 115, a communication interface 116, an input device 117, and an output device 118 are connected to a bus 100.

The processor 111 executes programs expanded in the RAM 112. The programs to be executed may include a management program for the processing in the embodiment.

The ROM 113 is a non-volatile storage that stores the management program expanded in the RAM 112. The auxiliary storage 114 is a storage that stores various pieces of information. Examples include a hard disk drive and a semiconductor memory. The auxiliary storage 114 may store a management program for the processing in the embodiment.

A portable storage medium 119 may be connected to the medium attachment unit 115. Examples of the portable storage medium 119 include optical discs (for example, a compact disc (CD) and a digital versatile disc (DVD)) and a semiconductor memory. The portable storage medium 119 may store the management program for the processing in the embodiment.

Examples of the input device 117 include a keyboard and a pointing device. The input device 117 receives inputs of instructions, information, and so on from the user. Examples of the output device 118 include a display device, a printer, and a speaker. The output device 118 outputs inquiries and instructions to the user, processing results, and so on.

The storage unit 24 illustrated in FIG. 2 may be implemented by the RAM 112, the ROM 113, or the auxiliary storage 114. The management unit 21, the control unit 22, the transfer unit 23, and the storage unit 24 illustrated in FIG. 2 may be implemented by the processor 111 executing the given management program.

The RAM 112, the ROM 113, the auxiliary storage 114, and the portable storage medium 119 are examples of computer-readable, tangible storage media. These tangible storage media are not transitory media such as a signal carrier wave.

It is to be understood that the embodiments are not limited to the above embodiment and that various configurations may be applied without departing from the scope of the present invention as defined in the independent claims.

## Claims

1. A communication program for causing a node device included in a data circulation network to execute a process, the process comprising:
when receiving a registration request to register metadata including attribute information on data that a terminal connected to one of the node devices has, transferring the metadata to another node device included in the data circulation network; and **characterised by**:
when receiving a first obtainment request to obtain the metadata,
determining, based on access authority information included in the metadata of the data, whether or not a user specified by the request to obtain the metadata is given permission to access to the metadata,
referring to the attribute information,
obtaining the metadata including the attribute information including a keyword specified in the first obtainment request, and
transmitting the obtained metadata to an issuer of the first obtainment request; and
when receiving a second obtainment request to obtain data based on the metadata, obtaining the data from the terminal and transferring the data to a requestor of the data.

2. The communication program according to claim 1, wherein the process further comprises, when receiving the registration request, computing a hash value of the data corresponding to the metadata, and
the metadata transferred to the other plurality of node devices includes the hash value.

3. The communication program according to claim 1 or 2, wherein the process is further comprises sharing the attribute information included in the metadata using a blockchain.

4. A node device included in a data circulation network, the node device comprising:
a reception unit configured to receive a registration request to register metadata including attribute information on data that a terminal connected to the node device has,
a first transfer unit configured to transfer the metadata to another node device included in the data circulation network;
**characterised by**:
a transmission unit configured to, when receiving a first obtainment request to obtain the metadata,
determine, based on access authority information included in the metadata of the data, whether or not a user specified by the request to obtain the metadata is given permission to access to the metadata,
refer to the attribute information,
obtain the metadata including the attribute information including a keyword specified in the first obtainment request, and
transmit the obtained metadata to an issuer of the first obtainment request; and
a second transfer unit configured to, when receiving a second obtainment request to obtain data based on the metadata, obtain the data from the terminal and transfer the data to a requestor of the data.

5. A method of communication for a node device included in a data circulation network to execute, the method comprising:
when receiving a registration request to register metadata including attribute information on data that a terminal connected to the node device has, transferring the metadata to another node device in the data circulation network;
**characterised by**:
when receiving an first obtainment request to obtain the metadata,
determining, based on access authority information included in the metadata of the data, whether or not a user specified by the request to obtain the metadata is given permission to access to the metadata,
referring to the attribute information,
obtaining the metadata including the attribute information including a keyword specified in the first obtainment request, and
transmitting the obtained metadata to an issuer of the first obtainment request; and
when receiving a second obtainment request to obtain data based on the metadata, obtaining the data from the terminal and transferring the data to a requestor of the data.

## Patentansprüche

1. Kommunikationsprogramm, um eine Knotenvorrichtung, die in einem Datenverkehrsnetz eingeschlossen ist, dazu zu bringen, einen Prozess auszuführen, wobei der Prozess umfasst:
wenn eine Registrierungsanforderung empfangen wird, um Metadaten einschließlich Attributinformationen zu Daten, die ein mit einer der Knotenvorrichtungen verbundenes Endgerät aufweist, zu registrieren, Übertragen der Metadaten an eine andere, im Datenverkehrsnetz eingeschlossenen Knotenvorrichtung; und **gekennzeichnet durch**:
wenn eine erste Erhaltungsanforderung empfangen wird, um die Metadaten abzurufen,
Bestimmen, auf Basis von Zugriffsberechtigungsinformationen, die in den Metadaten der Daten eingeschlossen sind, ob einem Benutzer, der von der Anforderung spezifiziert wird, um die Metadaten zu erhalten, die Genehmigung erteilt wird, auf die Metadaten zuzugreifen oder nicht,
Verweisen auf die Attributinformationen,
Erhalten der die Attributinformationen einschließenden Metadaten einschließlich eines Schlüsselworts, das in der ersten Erhaltungsanforderung spezifiziert ist, und
Übermitteln der erhaltenen Metadaten an einen Herausgeber der ersten Erhaltungsanforderung; und
wenn eine zweite Erhaltungsanforderung empfangen wird, um Daten auf Basis der Metadaten zu erhalten, Erhalten der Daten vom Endgerät und Übertragen der Daten an einen Anforderer der Daten.

2. Kommunikationsprogramm nach Anspruch 1, wobei der Prozess, wenn die Registrierungsanforderung empfangen wird, weiter das Berechnen eines Hash-Werts der den Metadaten entsprechenden Daten umfasst, und
die Metadaten, die an die andere Vielzahl von Knotenvorrichtungen übertragen werden, den Hash-Wert einschließen.

3. Kommunikationsprogramm nach Anspruch 1 oder 2, wobei der Prozess ist weiter die gemeinsame Nutzung der in den Metadaten eingeschlossenen Attributinformationen unter Verwendung einer Blockchain umfasst.

4. Knotenvorrichtung, die in einem Datenverkehrsnetz eingeschlossen ist, wobei die Knotenvorrichtung umfasst:
eine Empfangseinheit, die dazu ausgebildet ist, um eine Registrierungsanforderung zu empfangen, um Metadaten einschließlich Attributinformationen zu Daten, die ein mit der Knotenvorrichtung verbundenes Endgerät aufweist, zu registrieren,
eine erste Übertragungseinheit, die dazu ausgebildet ist, um die Metadaten an eine andere, im Datenverkehrsnetz eingeschlossenen Knotenvorrichtung zu übertragen;
**gekennzeichnet durch**:
eine Übermittlungseinheit, die dazu ausgebildet ist, um, wenn eine erste Erhaltungsanforderung, um die Metadaten zu erhalten, empfangen wird,
auf Basis von Zugriffsberechtigungsinformationen, die in den Metadaten der Daten eingeschlossen sind, zu bestimmen, ob einem Benutzer, der von der Anforderung spezifiziert wird, um die Metadaten zu erhalten, die Genehmigung erteilt wird, auf die Metadaten zuzugreifen oder nicht,
auf die Attributinformationen zu verweisen,
die die Attributinformationen einschließenden Metadaten einschließlich eines Schlüsselworts, das in der ersten Erhaltungsanforderung spezifiziert ist, zu erhalten, und
die erhaltenen Metadaten an einen Herausgeber der ersten Erhaltungsanforderung zu übermitteln; und
eine zweite Übertragungseinheit, die dazu ausgebildet ist, um, wenn eine zweite Erhaltungsanforderung empfangen wird, um Daten auf Basis der Metadaten zu erhalten, die Daten vom Endgerät zu erhalten und die Daten an einen Anforderer der Daten zu übertragen.

5. Kommunikationsverfahren für eine Knotenvorrichtung, die in einem Datenverkehrsnetz eingeschlossen ist, wobei das Verfahren umfasst:
wenn eine Registrierungsanforderung empfangen wird, um Metadaten einschließlich Attributinformationen zu Daten, die ein mit der Knotenvorrichtung verbundenes Endgerät aufweist, zu registrieren, Übertragen der Metadaten an eine andere Knotenvorrichtung im Datenverkehrsnetz;
**gekennzeichnet durch**:
wenn eine erste Erhaltugsanforderung empfangen wird, um die Metadaten abzurufen,
Bestimmen, auf Basis von Zugriffsberechtigungsinformationen, die in den Metadaten der Daten eingeschlossen sind, ob einem Benutzer, der von der Anforderung spezifiziert wird, um die Metadaten zu erhalten, die Genehmigung erteilt wird, auf die Metadaten zuzugreifen oder nicht,
Verweisen auf die Attributinformationen,
Erhalten der die Attributinformationen einschließenden Metadaten einschließlich eines Schlüsselworts, das in der ersten Erhaltungsanforderung spezifiziert ist, und
Übermitteln der erhaltenen Metadaten an einen Herausgeber der ersten Erhaltungsanforderung; und
wenn eine zweite Erhaltungsanforderung empfangen wird, um Daten auf Basis der Metadaten zu erhalten, Erhalten der Daten vom Endgerät und Übertragen der Daten an einen Anforderer der Daten.

## Revendications

1. Programme de communication pour amener un dispositif de nœud inclus dans un réseau de circulation de données à exécuter un processus, le processus comprenant :
lors de la réception d'une demande d'enregistrement pour enregistrer des métadonnées incluant des informations d'attribut sur des données qu'a un terminal connecté à un des dispositifs de nœud, le transfert des métadonnées à un autre dispositif de nœud inclus dans le réseau de circulation de données ; et **caractérisé par** :
lors de la réception d'une première demande d'obtention pour obtenir les métadonnées,
la détermination, sur la base d'informations d'autorité d'accès incluses dans les métadonnées des données, si un utilisateur spécifié par la demande pour obtenir les métadonnées est ou non autorisé à accéder aux métadonnées,
la référence aux informations d'attribut,
l'obtention des métadonnées incluant les informations d'attribut incluant un mot clé spécifié dans la première demande d'obtention, et
la transmission des métadonnées obtenues à un émetteur de la première demande d'obtention ; et
lors de la réception d'une seconde demande d'obtention pour obtenir des données sur la base des métadonnées, l'obtention des données à partir du terminal et le transfert des données à un demandeur des données.

2. Programme de communication selon la revendication 1, dans lequel le processus comprend en outre, lors de la réception de la demande d'enregistrement, le calcul d'une valeur de hachage des données correspondant aux métadonnées, et
les métadonnées transférées à l'autre pluralité de dispositifs de nœud incluent la valeur de hachage.

3. Programme de communication selon la revendication 1 ou 2, dans lequel le processus est comprend en outre le partage des informations d'attribut incluses dans les métadonnées en utilisant une chaîne de blocs.

4. Dispositif de nœud inclus dans un réseau de circulation de données, le dispositif de nœud comprenant :
une unité de réception configurée pour recevoir une demande d'enregistrement pour enregistrer des métadonnées incluant des informations d'attribut sur des données qu'a un terminal connecté au dispositif de nœud,
une première unité de transfert configurée pour transférer les métadonnées à un autre dispositif de nœud inclus dans le réseau de circulation de données ;
**caractérisé par** :
une unité de transmission configurée pour, lors de la réception d'une première demande d'obtention pour obtenir les métadonnées,
déterminer, sur la base d'informations d'autorité d'accès incluses dans les métadonnées des données, si un utilisateur spécifié par la demande pour obtenir les métadonnées est ou non autorisé à accéder aux métadonnées,
faire référence aux informations d'attribut,
obtenir les métadonnées incluant les informations d'attribut incluant un mot clé spécifié dans la première demande d'obtention, et
transmettre les métadonnées obtenues à un émetteur de la première demande d'obtention ; et
une seconde unité de transfert configurée pour, lors de la réception d'une seconde demande d'obtention pour obtenir des données sur la base des métadonnées, obtenir les données à partir du terminal et transférer les données à un demandeur des données.

5. Procédé de communication pour un dispositif de nœud inclus dans un réseau de circulation de données pour l'exécution, le procédé comprenant :
lors de la réception d'une demande d'enregistrement pour enregistrer des métadonnées incluant des informations d'attribut sur des données qu'a un terminal connecté au dispositif de nœud, le transfert des métadonnées à un autre dispositif de nœud dans le réseau de circulation de données ;
**caractérisé par** :
lors de la réception d'une première demande d'obtention pour obtenir les métadonnées,
la détermination, sur la base d'informations d'autorité d'accès incluses dans les métadonnées des données, si un utilisateur spécifié par la demande pour obtenir les métadonnées est ou non autorisé à accéder aux métadonnées,
la référence aux informations d'attribut,
l'obtention des métadonnées incluant les informations d'attribut incluant un mot clé spécifié dans la première demande d'obtention, et
la transmission des métadonnées obtenues à un émetteur de la première demande d'obtention ; et
lors de la réception d'une seconde demande d'obtention pour obtenir des données sur la base des métadonnées, l'obtention des données à partir du terminal et le transfert des données à un demandeur des données.
